# EUROPEAN PATENT APPLICATION

(11) **EP 4 167 156 A1**
(43) Date of publication of application: **19.04.2023**
(21) Application number: 21821154.8
(22) Date of filing: 17.02.2021
(51) Int. Cl.: G06Q 10/06, G05B 19/418

(54) **MULTI-SUBJECT COOPERATION PLANNING SYSTEM AND MULTI-SUBJECT COOPERATION PLANNING METHOD**

(30) Priority: 10.06.2020 JP 2020100871
(71) Applicant: Hitachi, Ltd., Tokyo 100-8280 (JP)
(72) Inventor: ISHIDO, Yumiko, Tokyo 100-8280 (JP); KOBAYASHI, Yuichi, Tokyo 100-8280 (JP)
(74) Representative: MERH-IP Matias Erny Reichl Hoffmann Patentanwälte PartG mbB
(86) International application number: PCT/JP2021/005997
(87) International publication number: WO 2021/250946

(57) **Abstract**

An object of the present invention is to shorten the time required for a plurality of organizations to reach an agreement on a plan proposal.

A preferrable aspect of the present invention is a multi-entity coordination planning system including: a plan proposal generating apparatus that generates a plurality of plan proposals; an evaluating apparatus that calculates time-dependent evaluation values of the plan proposals; and a recommendation level calculating apparatus that calculates time-dependent coordination success probabilities of the plan proposals, and calculates recommendation levels that are time-dependent values from the evaluation values and the coordination success probabilities.

## Description

### Technical Field

The present invention relates to a technology for facilitating creation of plans that do not cause conflict among a plurality of organizations.

### Background Art

In fields such as the transportation service industry or the manufacturing industry where a plurality of resources are required for providing services, operation plans about the individual resources are created to thereby realize provision of services as planned. The operation plan about each resource is created by a corresponding management organization, and coordination work becomes necessary in a case where there is a conflict between the plans. Particularly, in a case where it becomes not possible to execute a plan that is agreed on in advance due to a sudden event, it is necessary to agree on an alternative plan that does not cause conflict among organizations in a short term, and proceed with execution of the alternative plan.

Conventionally, there are proposals of technologies such as one in which schedules of a supply chain including allocation of suppliers of components and the like, production schedules of a plurality of factories, and allocation of delivery resources are created sequentially starting from the allocation of the suppliers by attempting to share information necessary for scheduling and results of each resultant schedule (see Patent Document 1).

In addition, there is a proposal of a "technology that makes it possible to efficiently and promptly execute processes that do not cause conflict among plans for mutual coordination while maintaining, as appropriate, the confidentiality of information about the plans among organizations managing the plans" (see Patent Document 2).

### Prior Art Document

### Patent Documents

Patent Document 1: JP-2011-96141-A
Patent Document 2: WO 2015/068231A1

### Summary of the Invention

### Problem to be Solved by the Invention

It is supposed, in Patent Document 1, that the plurality of factories accept plan proposals allotted to them, and engage in production according to the plan proposals. However, in fields such as the transportation service industry or the manufacturing industry, entities that manage resources necessary for providing services, and make plans about the resources straddle a plurality enterprises or a plurality departments of a single enterprise in some cases; as a result, different planning entities have different plan proposals that are preferrable to those planning entities in some cases. In such a case, Patent Document 1 does not give a method of coordinating plans, and designing a plan proposal that can be executed as a whole.

In addition, Patent Document 2 discloses a method of promptly performing processes for solving conflict among plans, but does not give a method of coordinating plans in a case where there is conflict thereamong, and designing a plan proposal that can be executed as a whole.

The inventors have thought that it might be possible to provide a technology that facilitates coordination of an overall plan by enabling designing of an operation plan on which other planning entities can easily agree, and made a proposal in Japanese Patent Application No. 2020-012131. According to this proposal, for example, an organization managing one of resource groups presents, to management organizations of other related resource groups, a plurality of plan proposals about the resource group managed by the organization managing the one resource, and obtain replies from the other organizations as to whether or not they can accept a plan proposal to thereby make it possible to design a plan on which all the organizations can agree.

However, particularly in a case where an agreement on an alternative proposal is required urgently due to a sudden event, it is difficult, in a short time, for other organizations to which a plurality of alternative plan proposals about a resource group A are presented, to examine all the alternative proposals about the resource group A as to whether they can make plans that do not cause conflict with resource groups that are managed by them, and to make replies. On the other hand, in a case where the resource-group-A management organization chooses one alternative plan proposal without taking into consideration the situations of the other organizations, and inquires of a plurality of the organizations, there is a possibility that agreements from all the organizations cannot be obtained before a time after which the alternative proposal becomes unexecutable, and it becomes necessary to start over designing of another alternative proposal.

In view of this, an object of the present invention is to shorten the time required for a plurality of organizations to reach an agreement on a plan proposal.

### Means for Solving the Problem

A preferrable aspect of the present invention is a multi-entity coordination planning system including: a plan proposal generating apparatus that generates a plurality of plan proposals; an evaluating apparatus that calculates time-dependent evaluation values of the plan proposals; and a recommendation level calculating apparatus that calculates time-dependent coordination success probabilities of the plan proposals, and calculates recommendation levels that are time-dependent values from the evaluation values and the coordination success probabilities.

Another preferrable aspect of the present invention is a multi-entity coordination planning method executed by an information processing apparatus including a CPU and a storage apparatus, the multi-entity coordination planning method including: a first step of, by the CPU, generating a plurality of plan proposals, and storing the plurality of plan proposals on the storage apparatus; a second step of, by the CPU, evaluating the plurality of plan proposals, generating self-evaluation values, and storing the self-evaluation values on the storage apparatus; a third step of, by the CPU, estimating coordination time of the plurality of plan proposals, obtaining coordination time estimated values, and storing the coordination time estimated values on the storage apparatus; a fourth step of, by the CPU, calculating recommendation values of the plan proposals on a basis of the self-evaluation values and the coordination time estimated values, and storing the recommendation values on the storage apparatus; and a fifth step of, by the CPU, selecting at least one of the plurality of plan proposals on a basis of the recommendation values, and proposing the at least one plan proposal to a coordinated entity.

### Advantages of the Invention

According to the present invention, it is possible to shorten the time required for a plurality of organizations to reach an agreement on a plan proposal. Problems, configuration, and advantages other than those described above are made clear by the following explanation of embodiments.

### Brief Description of the Drawings

FIG. 1 is a block diagram depicting system configuration in an implementation example.
FIG. 2 is a block diagram depicting internal configuration of a PC included in the system.
FIG. 3 is a table depicting a data structure of past response information 111 in the implementation example.
FIG. 4 is a table depicting a data structure of alternative plan proposal information 113 in the implementation example.
FIG. 5A is a graph depicting plan self-evaluation information 114 in the implementation example.
FIG. 5B is a graph depicting other plan self-evaluation information 114 in the implementation example.
FIG. 6 is a figure depicting a data structure of plan estimated coordination time information 115 in the implementation example.
FIG. 7 is a figure depicting a data structure of plan recommendation level information 116 in the implementation example.
FIG. 8 is a schematic diagram of a processing procedure of the system in the implementation example.
FIG. 9 is a flowchart depicting details of Step S812 performed by a recommendation level calculating apparatus 108.
FIG. 10 is a figure depicting an overview of a result display screen in the implementation example.
FIG. 11 is a flowchart explaining a procedure until an overall plan is created in the implementation example.

### Modes for Carrying Out the Invention

Embodiments are explained in detail by using the figures. It should be noted that the present invention should not be interpreted as being limited to description contents of embodiments depicted below. It is easy for those skilled in the art to understand that the specific configuration of the present invention can be changed within the scope not deviating from the idea and aim of the present invention.

In configuration of the invention explained below, the same reference characters are commonly used for identical portions or portions having similar functionalities in different figures, and overlapping explanations are omitted in some cases.

In a case where there are a plurality of identical elements or elements having a similar functionality, those elements are explained with different suffixes added to the same reference character in some cases. It should be noted that in a case where it is not necessary to make distinctions between a plurality of elements, those elements are explained without suffixes in some cases.

The use of words such as "first," "second," "third," and the like in the present specification and the like is for the purpose of identifying constituent elements, and does not necessarily limit numbers, orders, or contents thereof. In addition, numbers for identifying constituent elements are used independently in each context, and it is not always the case where numbers used in one context represent identical constituent elements in another context. In addition, a constituent element identified by a number is allowed to also carry out functionalities of a constituent element identified by another number.

The position, size, shape, range, and the like of each constituent element depicted in a figure or the like do not represent the actual position, size, shape, range, and the like in order to facilitate understanding of the invention, in some cases. For this reason, the present invention is not necessarily limited by positions, sizes, shapes, ranges, and the like disclosed in figures and the like.

Publications, patents, and patent applications cited in the present specification are included as part of the explanation of the present specification with no changes being made thereto.

It is supposed that each constituent element that is expressed by a singular form in the present specification can also be expressed by a plural form, unless particularly depicted by contexts clearly.

An example of configuration explained in an implementation example is a multi-entity coordination planning system including: means for calculating time-dependent evaluation values of alternative plans; means for estimating lengths of time necessary for inter-organizational coordination of the alternative plans; and means for calculating time-dependent recommendation levels from the evaluation values and the estimated coordination time of the alternative plans. This system is a multi-entity coordination planning system that proposes a plan with currently the highest recommendation level to coordinated entities, and, in a case where responses of acceptance cannot be obtained from all the coordinated entities before a particular time before which the recommendation level of the proposed plan is the highest, recomputes recommendation levels after the time, and proposes, to the coordinated entities, a plan with the highest recommendation level at the time.

### <1. System Configuration>

Modes for carrying out the invention are explained below by using the figures. First, system configuration is mentioned.

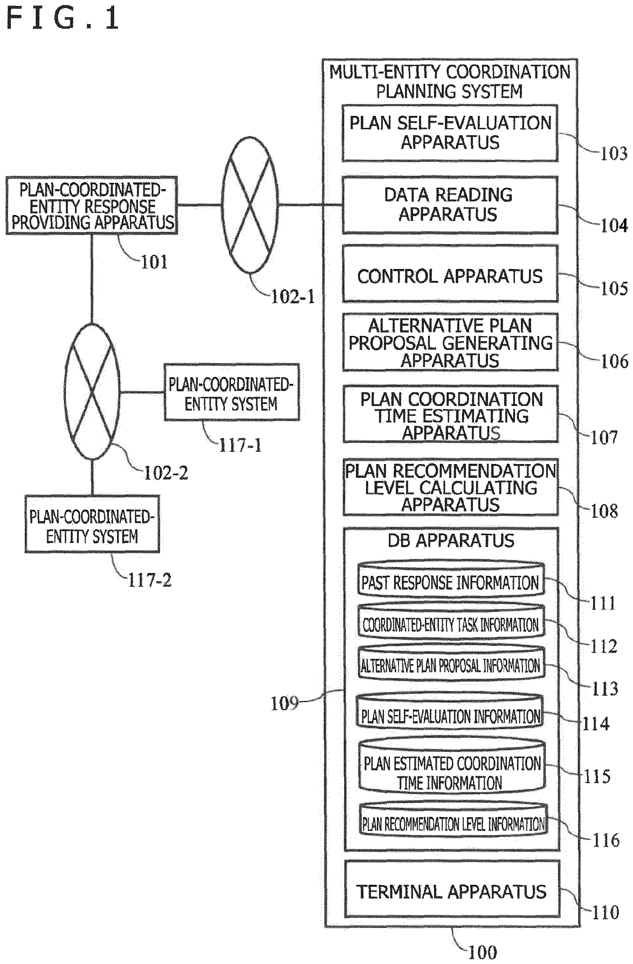

FIG. 1 is a system configuration diagram depicting system configuration in an implementation example. In this figure, a reference character 100 denotes a multi-entity coordination planning system, a reference character 101 denotes a plan-coordinated-entity response providing apparatus, a reference character 102 denotes networks, a reference character 103 denotes a plan self-evaluation apparatus, a reference character 104 denotes a data reading apparatus, a reference character 105 denotes a control apparatus, a reference character 106 denotes an alternative plan proposal generating apparatus, a reference character 107 denotes a plan coordination time estimating apparatus, a reference character 108 denotes a plan recommendation level calculating apparatus, a reference character 109 denotes a DB apparatus, a reference character 110 denotes a terminal apparatus, a reference character 111 denotes past response information, a reference character 112 denotes coordinated-entity task information, a reference character 113 denotes alternative plan proposal information, a reference character 114 denotes plan self-evaluation information, a reference character 115 denotes plan estimated coordination time information, a reference character 116 denotes plan recommendation level information, and a reference character 117 denotes plan-coordinated-entity systems.

The multi-entity coordination planning system 100, the plan-coordinated-entity systems 117, and the plan-coordinated-entity response providing apparatus 101 can communicate with each other through the networks 102. Whereas two networks 102 are connected to each other via the plan-coordinated-entity response providing apparatus 101 in FIG. 1, this is an example, and there are no restrictions regarding the configuration of networks. In addition, whereas the plan-coordinated-entity response providing apparatus 101 relays communication between the multi-entity coordination planning system 100 and the plan-coordinated-entity systems 117 in the present implementation example, configuration in which the plan-coordinated-entity response providing apparatus 101 is omitted, and the multi-entity coordination planning system 100 and the plan-coordinated-entity systems 117 communicate directly with each other may be adopted.

The multi-entity coordination planning system 100 and plan-coordinated-entity systems 117-1 and 117-2 are each a system for managing resources provided for a business, a service, or the like. As an example, it is now supposed that the multi-entity coordination planning system 100 manages a resource group A, the plan-coordinated-entity system 117-1 manages a resource group B, and the plan-coordinated-entity system 117-2 manages a resource group C. These multi-entity coordination planning system 100 and plan-coordinated-entity systems 117-1 and 117-2 may be operated by different business entities (e.g. corporations) or may be ran by different departments of one business entity.

It is supposed, in the present implementation example, that the multi-entity coordination planning system 100 plans a service using the resource group A. Whereas there are three entities A to C in the present example, the present implementation example can certainly be applied similarly to a case where there are four entities or more.

The plan-coordinated-entity response providing apparatus 101 provides plan information about management organizations of one or more types of other resource group (the resource group B, the resource group C, etc.) necessary for providing services through coordination with the resource group A that creates an operation plan by using the multi-entity coordination planning system 100. It is supposed that the plan information is transmitted to the plan-coordinated-entity response providing apparatus 101 from the plan-coordinated-entity systems 117-1 and 117-2. Furthermore, the plan-coordinated-entity response providing apparatus 101 receives the provided plan information about the resource group A, receives, from the plan-coordinated-entity systems 117-1 and 117-2, responses to the provided plan information about the resource group A such as approvals or correction requests from other resource group management organizations, and provides the responses to the multi-entity coordination planning system 100.

Note that whereas the plan-coordinated-entity systems 117-1 and 117-2 may be configured similarly to the multi-entity coordination planning system 100, in the present implementation example, it is sufficient if the plan-coordinated-entity systems 117-1 and 117-2 have at least a functionality of receiving input of plan information or responses such as approvals or correction requests that are described above, and transmitting them to the plan-coordinated-entity response providing apparatus 101, and a functionality of receiving information transmitted from the plan-coordinated-entity response providing apparatus 101. It is supposed that plan information, approvals, or/and correction requests is/are input by a person in charge belonging to each resource group management organization.

For example, it is supposed that for the provision of transportation services in a railway system, the resource A group is resources related to train operation, the resource group B is human resources related to operation by motormen and the like, and the resource group C is resources necessary for maintenance (instruments/facilities, human resources such as mechanics, etc.). In this case, the plan-coordinated-entity response providing apparatus 101 transfers, to the multi-entity coordination planning system 100, approval responses or revision requests from an operator personnel management department and a maintenance department about a plan related to the resource A group drawn up by a train operation plan management department. Furthermore, in a case where a plan related to the resource A group is approved by the operator personnel management department and the maintenance department, the plan-coordinated-entity response providing apparatus 101 provides, to the multi-entity coordination planning system 100, an operator personnel plan and maintenance plan methods created by the departments. Typically, the provision is performed via the Internet using HTTP (Hyper Text Transfer Protocol).

The networks 102 are the Internet or media such as dedicated networks that connect the plan-coordinated-entity response providing apparatus 101 and the multi-entity coordination planning system 100 to each other. The networks 102 are cable networks or wireless networks, and may include a plurality of networks.

In order to provide services through coordination with resource groups (the resource groups B and C in the present example) managed by one or more other organizations, the multi-entity coordination planning system 100 creates a plan for allocating a resource group (the resource group A in the present example) managed by an organization which the multi-entity coordination planning system 100 belongs to. The multi-entity coordination planning system 100 includes a plan self-evaluation apparatus 103, a data reading apparatus 104, a control apparatus 105, an alternative plan proposal generating apparatus 106, a plan coordination time estimating apparatus 107, a plan recommendation level calculating apparatus 108, a DB apparatus 109, and a terminal apparatus 110.

The plan self-evaluation apparatus 103 is an apparatus that calculates an evaluation value of a plan proposal generated in the alternative plan proposal generating apparatus 106 from the perspective of a department which the multi-entity coordination planning system 100 belongs to (the train operation plan management department in the present example), and stores results thereof as the plan self-evaluation information 114. Any value can be defined as the evaluation value, and, for example, in evaluation of a resource operation plan related to train operation, total delay time from an original plan, and changes in a volume of shipment by a train are used as evaluation criteria, and so on. It is supposed that algorithms and evaluation functions for the evaluation are defined and stored in advance on the self-evaluation apparatus 103. Note that whereas the configuration in the present implementation example is aimed to reach, in a short term, an agreement on an alternative plan that does not cause conflict among organizations, and proceed with execution of the alternative plan, it is, needless to say, that the present implementation example may be applied generally to plans which are not alternative plans.

The data reading apparatus 104 is an apparatus that receives input of data provided by the plan-coordinated-entity response providing apparatus 101, and stores the data as the past response information 111 on the DB apparatus 109.

The control apparatus 105 is an apparatus that centrally controls each apparatus included in the multi-entity coordination planning system 100, and performs control such that the system designs a multi-entity coordination plan. It is supposed that the control apparatus 105 performs control also about known processes executed by typical PCs such as data transmission/reception via the networks 102.

The alternative plan proposal generating apparatus 106 is an apparatus that generates one or more resource-group-A operation plan alternative proposals, and stores results thereof as the alternative plan proposal information 113.

The plan coordination time estimating apparatus 107 is an apparatus that estimates lengths of time (called as coordination time estimated values) required for coordinated entities (management organizations such as the resource group B or the resource group C; the operator personnel management department and the maintenance department in the present example) to make replies as responses of acceptance/rejection of an alternative plan proposal generated in the alternative plan proposal generating apparatus 106, and stores results thereof as the plan estimated coordination time information 115.

The plan recommendation level calculating apparatus 108 is an apparatus that calculates a recommendation level of an alternative plan proposal generated in the alternative plan proposal generating apparatus 106 that represents how much the alternative plan proposal should be chosen for coordination with coordinated entities on the basis of the plan self-evaluation information 114 and the plan estimated coordination time information 115, and stores results thereof in the recommendation level information 116.

The DB apparatus 109 is a database (DB) that retains data created by each apparatus, and includes data such as the past response information 111, the coordinated-entity task information 112, the alternative plan proposal information 113, the plan self-evaluation information 114, the plan estimated coordination time information 115, or the plan recommendation level information 116. Note that the DB has a functionality of registering data, searching data, extracting related data, deleting data, and so on. It is supposed that the DB apparatus 109 is realized by a typical PC in the present implementation example, and, in that case, the DB apparatus can be realized by the typical PC and typical DB software that operates on the typical PC.

The terminal apparatus 110 is a terminal operated by an operator of the multi-entity coordination planning system 100. The terminal apparatus 110 is an apparatus by which a designed resource-group-A operation plan is displayed, an approval of the operator is received to proceed with a processing procedure, and so on. Data to be used includes data explained below.

The past response information 111 is response information such as decisions by management organizations such as the resource group B or the resource group C such as acceptance/rejection of an operation alternative plan proposal about the resource group A proposed by the multi-entity coordination planning system 100, and lengths of time required for the plan-coordinated-entity response providing apparatus 101 or the multi-entity coordination planning system 100 to receive the decisions from the management organizations such as the resource group B or the resource group C since the multi-entity coordination planning system 100 proposed the alternative plan.

The coordinated-entity task information 112 is information about tasks to be performed from reception of a resource-group-A operation plan alternative proposal by management organizations of the resource group B, the resource group C, and the like which are plan-coordinated entities, and decisions of acceptance/rejection until transfer of the decisions to the plan-coordinated-entity response providing apparatus 101. For example, in a case where there is a rule that a reply should be made within a predetermined length of time in a case where there is a notification of an alternative proposal under a certain condition, the coordinated-entity task information 112 includes such task-manual-related information.

The alternative plan proposal information 113 is information about a resource-group-A operation plan alternative proposal generated by the alternative plan proposal generating apparatus 106. It is sufficient if, for example, the alternative plan proposal information 113 is expressed in a format that allows one to uniquely understand an operation plan by: decision variables such as a train service code and a time to which a train is allocated if the present implementation example is applied to train operation; a combination of the values; or the like.

The plan self-evaluation information 114 is value information generated by evaluation, by the plan self-evaluation apparatus 103, of a resource-group-A alternative operation plan generated in the alternative plan proposal generating apparatus 106. The evaluation is performed by calculating a value from the perspective of the department which the multi-entity coordination planning system 100 belongs to in a case where an alternative plan proposal is accepted by other related organizations, and executed. For example, in evaluation of a resource operation plan related to train operation, total delay time from an original plan, and changes in a volume of shipment by a train are used as evaluation criteria, and so on. It is supposed that algorithms for the evaluation are defined by a user and stored in advance in the self-evaluation information 114.

The evaluation value is dependent on a time at which execution of the alternative proposal is proceeded with. For example, in a case where the plan has to be delayed as a whole depending on a time at which execution of the plan is proceeded with after reaching an agreement among organizations, the total delay time increases, and the longer the inter-organizational agreement and the plan execution time are delayed, the lower the evaluation value of the plan. In addition, in a case of a plan proposal which becomes unexecutable after a particular time, the evaluation value becomes zero in some cases at the time point of the inter-organizational agreement and the plan execution time being passed a threshold time point.

The plan estimated coordination time information 115 is information about results obtained by calculation, by the plan coordination time estimating apparatus 107, of an estimated value of a length of time required for receiving replies of acceptance/rejection of a resource-group-A alternative operation plan generated in the alternative plan proposal generating apparatus 106 from management organizations such as the resource group B or the resource group C.

The plan recommendation level information 116 is information about recommendation levels of one or more resource-group-A alternative operation plans calculated by the plan recommendation level calculating apparatus 108 from information including the plan self-evaluation information 114 and the plan estimated coordination time information 115. An alternative plan with a high recommendation level is used for coordination with management organizations such as the resource group B or the resource group C. Note that details of these pieces of data are mentioned later.

It is supposed, in the present implementation example, that typical PCs are used for each apparatus and the systems 101, 103 to 110, and 117 in FIG. 1, and central processing units of the PCs execute programs stored on storage apparatuses to thereby realize functionalities of the apparatuses. It should be noted that it is also possible to realize the functionalities not by using typical PCs, but by using dedicated machines. In addition, it is supposed that the apparatuses in FIG. 1 are connected with each other via the networks. In addition, each apparatus or system in FIG. 1 may be configured by using a single PC or a certain number of PCs may share a functionality.

It is supposed, in the present implementation example, that the multi-entity coordination planning system 100 doubles as a managing system that has a functionality of managing the resource group A. That is, the multi-entity coordination planning system 100 has a functionality of a plan-coordinated-entity system 117 that manages the resource group A. It should be noted that it is also possible to adopt configuration in which the functionality of the plan-coordinated-entity system 117 is omitted from the multi-entity coordination planning system 100, and the functionality is shared by a plurality of plan-coordinated-entity systems 117. In this case, for example, by being triggered by an instruction from the plan-coordinated-entity system 117-1, the multi-entity coordination planning system 100 selects a plan proposal that should be proposed to other plan-coordinated-entity systems such as the plan-coordinated-entity system 117-2.

In addition, in another mode, each of the plan-coordinated-entity systems 117-1 and 117-2 may have the configuration of the multi-entity coordination planning system 100.

### <2. System Hardware Configuration>

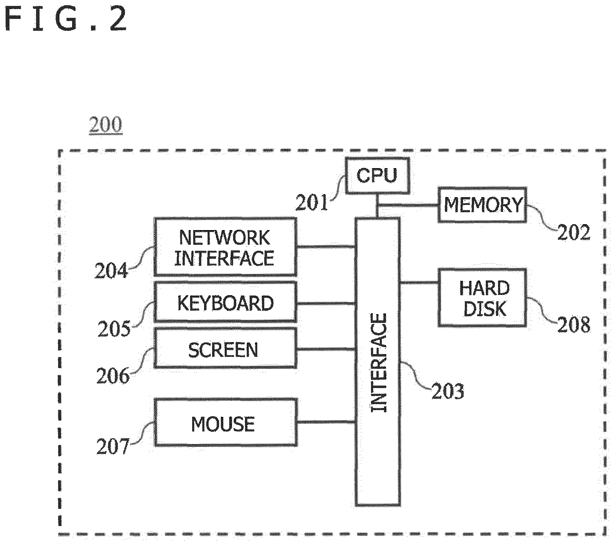

Internal configuration of a typical PC is explained below as configuration of each apparatus or the system 101, 103 to 110, or 117 by using the figure depicting configuration of a PC 200 in FIG. 2.

In FIG. 2, a reference character 201 denotes a CPU, a reference character 202 denotes a memory, a reference character 203 denotes an interface, a reference character 204 denotes a network interface, a reference character 205 denotes a keyboard, a reference character 206 denotes a screen, a reference character 207 denotes a mouse, and a reference character 208 denotes a hard disk.

The CPU 201 is a central processing unit (Central Processing Unit), and is an apparatus that can execute a program that is recorded in the memory 202 or is transferred from the hard disk 208 to the memory 202 in advance. Note that the program may be introduced via a detachable storage medium that can be used by the PC, as necessary. In this case, an apparatus for reading out the program from the storage medium is connected to the interface 203. Note that as such storage media and apparatuses for reading out the program from the storage media, optical discs (CD, DVD, Blue-ray disc, etc.), and apparatuses that use them, and flash memories and apparatuses that use them are generally known, and can be used. In addition, the program may be introduced to the PC via a communication medium (a communication line or carrier waves on a communication line) through the network interface 204, as necessary.

The memory 202 is used to temporarily record programs and data. The interface 203 is used to connect apparatuses in the PC system to each other. The network interface 204 is an apparatus for communication with a PC or the like outside the PC system. The keyboard 205 is an apparatus operated by an operator of the PC system in order to give commands or perform data input to the PC system. The screen 206 is an apparatus for displaying processing results and the like. The mouse 207 is an apparatus which is used to move a pointer displayed on the screen, and whose buttons are pressed by an operator when the pointer is at a certain location on the screen to thereby allow the operator to specify a position on the screen, and inform the CPU 201 about some action. Note that another pointing device such as a touch panel can also be used as an alternative to the mouse 207. In a case where a touch panel is used as an alternative to the mouse 207, typically, a pointer is not necessary. The hard disk 208 is an apparatus that stores programs and data, and, for example, can be configured by using a magnetic disc, a nonvolatile memory, or the like. In this case, the programs and the data stored on the hard disk 208 typically remain even in a case where the power supply of the hard disk 208 is turned off, and then is turned on. Note that an operating system (OS) may be introduced to the hard disk 208 in advance. By doing so, it becomes possible to specify a program by using a file name, and so on. Here, an OS is basic software of a computer, and a generally widely known OS can be used.

The system hardware configuration has been explained thus far with reference to the PC 200 depicted in FIG. 2. Functionalities of each apparatus or the system 101, 103 to 110, or 117 in FIG. 1 are realized by the CPU 201 executing a program stored on the hard disk 208 or the memory 202 to thereby perform determined computations and processes in cooperation with other hardware. As mentioned already, each apparatus may be configured by using one PC or all the apparatuses may be configured by using one PC. Alternatively, one apparatus may be configured by using a plurality of network-connected PCs. Functionalities equivalent to the functionalities realized by programs in the implementation example can be realized also by hardware such as an FPGA (Field Programmable Gate Array) or an ASIC (Application Specific Integrated Circuit).

### <3. Data Structures>

Next, data structures are mentioned.

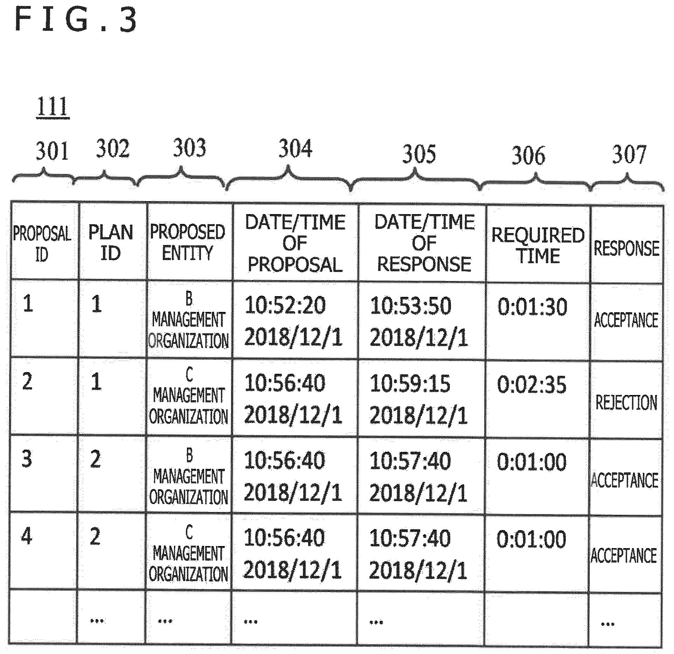

First, the past response information 111 in the implementation example is explained by using FIG. 3. The past response information 111 is generated by the control apparatus 105. FIG. 3 is a figure depicting a data structure of the past response information 111 in the implementation example.

A proposal ID 301 is a number that uniquely identifies a process of proposing an alternative plan to another organization. Generation of a proposal ID is triggered by transmission of an operation plan proposal generated in the alternative plan proposal generating apparatus 106 to a particular plan-coordinated-entity system 117. A plan ID 302 is a number that uniquely identifies a proposed resource-group-A operation plan proposal. Generation of plan ID is triggered by generation of an operation plan proposal in the alternative plan proposal generating apparatus 106. For example, in a case where a single plan proposal is proposed to a plurality of different organizations, those proposals are recorded by using a single plan ID and different proposal IDs.

A name of a proposed-entity organization in the proposal process is written as a proposed entity 303. A date/time when the resource-group-A management organization transmits a plan proposal to a proposed entity in the proposal process, and a date/time when a response from the proposed-entity organization to the plan proposal is received from the plan-coordinated-entity response providing apparatus 101 are written as a date/time of proposal 304 and a date/time of response 305, respectively. Required time 306 is a difference between the date/time of response 305 and the date/time of proposal 304, and is a length of time required for a proposed entity to send, to the plan-coordinated-entity response providing apparatus 101, a decision whether not a proposal of an alternative plan is acceptable after reception of the proposal. A response 307 is a response of a proposed entity to a proposal.

Next, a data structure of the alternative plan proposal information 113 in the implementation example is explained.

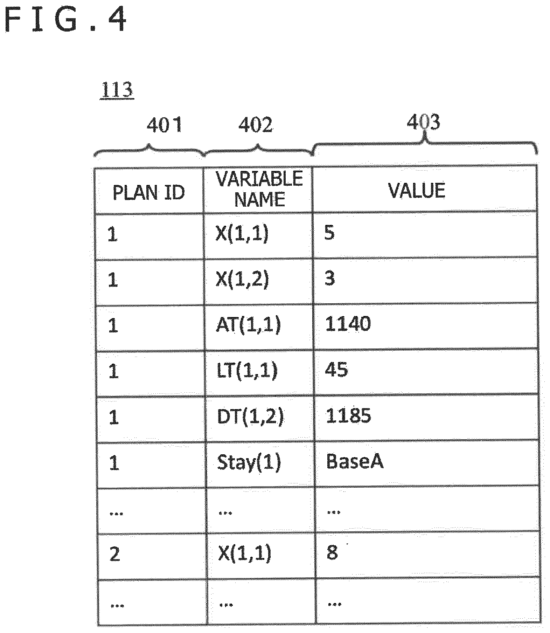

FIG. 4 is a figure depicting a data structure of the alternative plan proposal information 113 in the implementation example. The alternative plan proposal information 113 is generated by the alternative plan proposal generating apparatus 106. A plan ID 401 is a number that uniquely identifies a resource-group-A operation plan proposal. A variable name 402 is a decision variable that should be decided in a plan proposal, and a value of the decision variable in the plan proposal is written as a value 403. A plan proposal with a particular plan ID is explained by being given values of all decision variables. That is, the plan proposal with a "plan ID" of "1" is expressed by being given values of all decision variables like "5" as the value of "X (1, 1)" and "3" as the value of "X(1,2)."

Next, a data structure of the plan self-evaluation information 114 in the implementation example is explained.

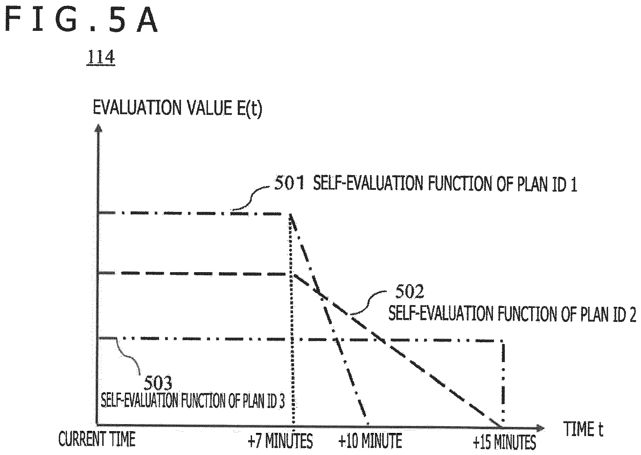

FIG. 5A is a figure depicting the plan self-evaluation information 114 in the implementation example. Self-evaluation information of each plan is expressed as a time-dependent function. That is, the self-evaluation information 114 is data representing a relation between time t and an evaluation value E.

An evaluation function E(t) for computing the evaluation value E can be defined by a user. For example, in a case where delay time of a plan is treated as an evaluation subject, and an evaluation function that gives an evaluation value that decreases linearly in relation to delay time is used, for example an evaluation value 501 of a plan ID 1 is constant in the time range from zero to seven minutes, and, if the delay time exceeds seven minutes, the plan needs to be executed by making a correction to delay the plan, thus the evaluation value lowers. The same applies also to an evaluation value 502 of a plan ID 2. In addition, an evaluation value 503 of a plan ID 3 is constant in the time range from zero to 15 minutes, but, if the delay time exceeds 15 minutes, the plan becomes unexecutable, thus the evaluation value becomes zero.

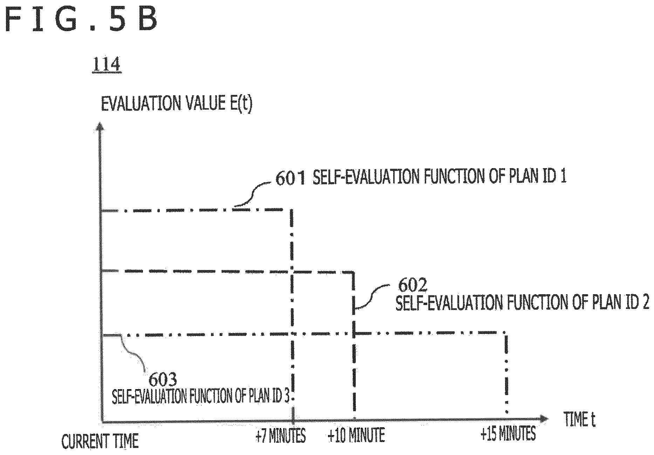

FIG. 5B depicts an example of the self-evaluation information 114 in a case where a volume of shipment by a train is treated as an evaluation subject. In a case of a train whose operation for shipment becomes impossible after a certain time, an evaluation function gives two values. For example, an evaluation value 601 of the plan ID 1 is constant in the time range from zero to seven minutes since the train can be operated, and the transportation amount does not change, but the shipment volume becomes zero, and the evaluation value becomes zero after a lapse of seven minutes since the train can no longer be operated after the lapse of seven minutes. The same applies also to an evaluation value 602 of the plan ID 2, and an evaluation value 603 of the plan ID 3.

Whereas evaluation values change linearly or assume two values in accordance with evaluation functions E(t) in the examples above, evaluation values may change nonlinearly. Alternatively, certain other evaluation functions that use time as one of the variables may be used. Alternatively, not evaluation functions E(t), but table formats representing correlation between time t and evaluation values E may be adopted. That is, a user can set evaluation functions E(t) as desired. Evaluation functions E(t) are monotonically decreasing functions in many cases.

Next, a data structure of the plan estimated coordination time information 115 in the implementation example is explained.

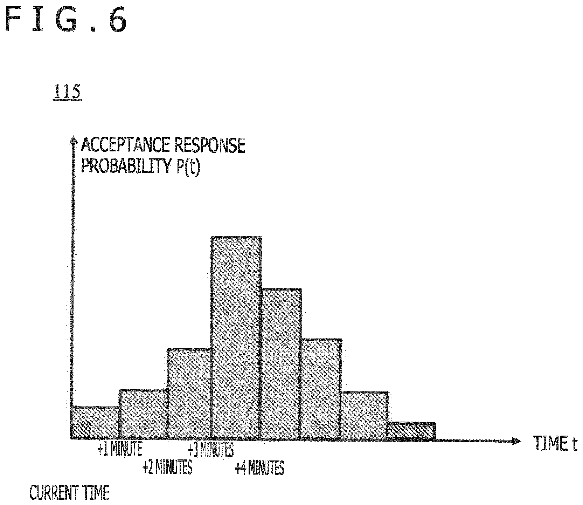

FIG. 6 is a figure depicting a data structure of the plan estimated coordination time information 115 in the implementation example. The plan estimated coordination time information is expressed as a probability that a response of acceptance to an alternative plan will be received from a plan-proposed entity at time t, and is expressed by an acceptance response probability P(t) which is a time-dependent function, for example.

Next, a data structure of the plan recommendation level information 116 in the implementation example is explained.

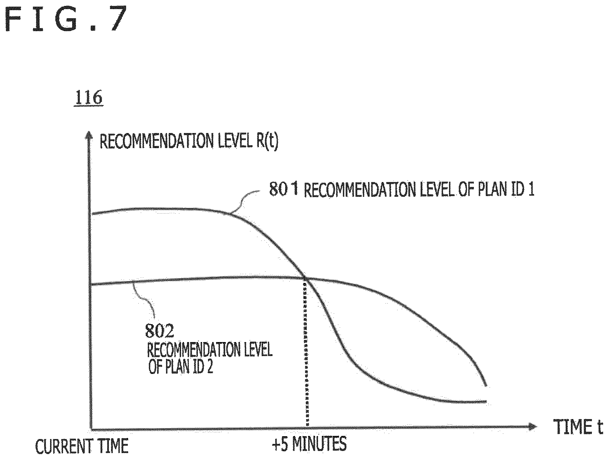

FIG. 7 is a figure depicting a data structure of the plan recommendation level information 116 in the implementation example. The plan recommendation level information is expressed by a time-dependent function R(t) that gives a recommendation level R of an alternative plan proposal representing how much the plan should be considered for inter-organizational coordination. Data structures have been explained thus far.

### <4. Explanation of Processes>

Next, processes are mentioned. First, processes of an overview of the system are explained.

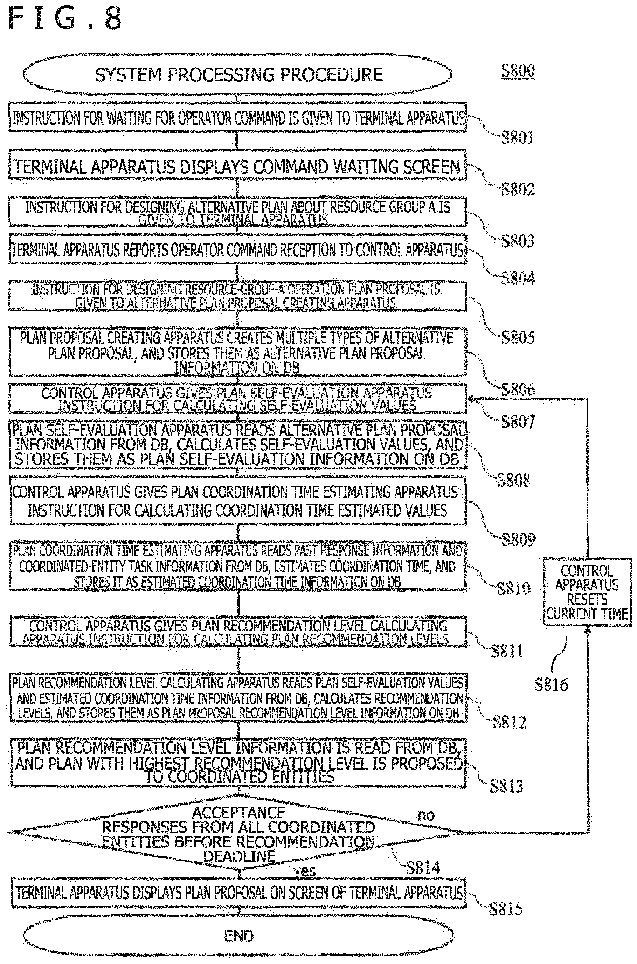

FIG. 8 is a schematic diagram of a processing procedure of the multi-entity coordination planning system 100 in the implementation example.

Step S801 is a process in which the control apparatus 105 instructs the terminal apparatus 110 to wait for an operator command.

Step S802 is a process in which the terminal apparatus 110 displays a command waiting screen on the screen 206 of the terminal apparatus 110.

Step S803 is a process in which an operator of the multi-entity coordination planning system 100 instructs the terminal apparatus 110 to design a resource-group-A alternative operation plan.

Step S804 is a process in which the terminal apparatus 110 reports operator command reception to the control apparatus 105.

Step S805 is a process in which the control apparatus 105 instructs the alternative plan proposal generating apparatus 106 to design resource-group-A operation plan proposals.

The processes above are explained supposing that the multi-entity coordination planning system 100 is under the resource-group-A management organization. It should be noted that, as mentioned before, functionalities explained below can also be shared by management organizations of resource groups. In that case, the start of the processes at and after Step S805 may be triggered by reception of an alternative operation plan designing/creation request from each plan-coordinated-entity system 117 through the terminal apparatus 110.

Step S806 is a process in which the alternative plan proposal generating apparatus 106 creates multiple types of resource-group-A operation plan proposal, and stores them as the alternative plan proposal information 113 on the DB. Here, creation of operation plan proposals can be performed by using a general-purpose mathematical optimization tool such as a CP solver or an MIP solver among others.

Step S807 is a process in which the control apparatus 105 instructs the plan self-evaluation apparatus 103 to calculate self-evaluation values.

Step S808 is a process in which the plan self-evaluation apparatus 103 instructs the data reading apparatus 104 to read the alternative plan proposal information 113 from the DB, calculates self-evaluation values E, and stores them as the plan self-evaluation information 114 on the DB. Since there are multiple types of operation plan proposal, a self-evaluation value E is stored for each of them.

Step S809 is a process in which the control apparatus 105 instructs the plan coordination time estimating apparatus 107 to calculate coordination time estimated values.

Step S810 is a process in which the plan coordination time estimating apparatus 107 estimates coordination time of each coordinated entity, and stores them as the estimated coordination time information 115 on the DB. There are a variety of coordination time estimation methods. In a simple example, a user empirically predicts estimated time required for obtaining an acceptance reply from each coordinated entity, the estimated time is stored as estimated coordination time data like the one depicted in FIG. 6, and the plan coordination time estimating apparatus 107 refers to estimated coordination time data of a proposed entity to estimate coordination time.

In another example, machine learning technologies may be applied. For example, for the plan coordination time estimating apparatus 107, the past response information 111 is read from the DB, and a function approximator such as a DNN (Deep Neural Network) is trained by using training data including proposed entities 303 as problems and required time 306 as correct answers.

By adding the alternative plan proposal information 113 corresponding to plan IDs 302 to the problems in addition to the proposed entities, and training the function approximator by using the problems, influence of contents of plan proposals to be proposed can be taken into consideration, and the estimation precision can be enhanced.

In addition, by adding the coordinated-entity task information 112 to the problems in addition to the proposed entities, and training the function approximator by using the problems, influence of characteristics of proposed entities can be taken into consideration, and the estimation precision can be enhanced. For example, as mentioned before, in a case where the coordinated-entity task information 112 includes task-manual-related information including a rule that a reply should be made within a predetermined length of time in a case where there is a notification of an alternative proposal, it is considered that a value of expectation that coordination time will not exceed the predetermined length of time rises.

As mentioned above, Step S810 is a process in which the past response information 111 and the coordinated-entity task information 112 are read from the DB, and coordination time within which an acceptance response will be obtained from each coordinated entity is estimated, and stored as the estimated coordination time information 115 on the DB. It is supposed, in the present implementation example, that estimation of coordination time is performed by using a known technology such as machine learning from the past response information 111 and the coordinated-entity task information 112.

The estimated coordination time information 115 acquires coordination time of all coordinated entities to which alternative plan proposals are proposed. In a case where plan contents are also included in training data in machine learning, and response time is dependent on the plan contents, the estimated coordination time information 115 is stored for individual operation plan proposals since there are multiple types of operation plan proposal. In a case where response time is not dependent on the plan contents, but is dependent only on proposed entities, one piece of the estimated coordination time information 115 is obtained for each proposed entity. In a case where it is known in advance that response time is not dependent on the plan contents, it becomes possible to adopt a simplified structure by omitting the plan contents from input.

Step S811 is a process in which the control apparatus 105 instructs the plan recommendation level calculating apparatus 108 to calculate plan recommendation levels.

Step S812 is a process in which the plan recommendation level calculating apparatus 108 instructs the data reading apparatus 104 to read the plan self-evaluation information 114 and the estimated coordination time information 115 from the DB, calculates recommendation levels, and stores them as the plan recommendation level information 116 on the DB.

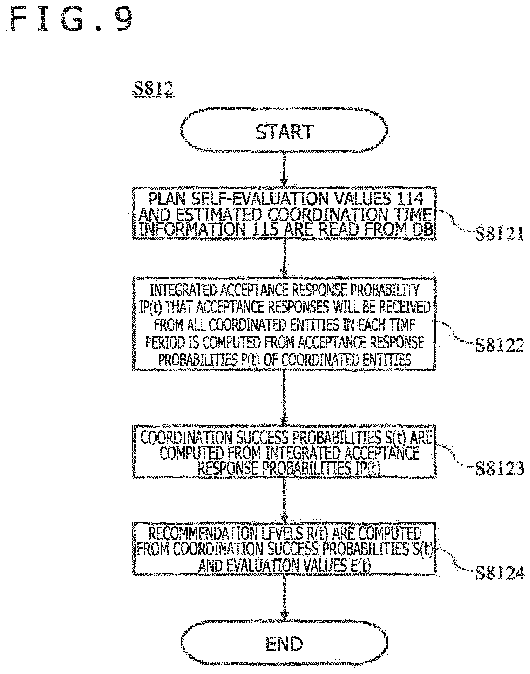

FIG. 9 is a flowchart depicting details of Step S812 performed by the recommendation level calculating apparatus 108.

At Step S8121, the plan self-evaluation information 114 (FIG. 5A and FIG. 5B) and the estimated coordination time information 115 (FIG. 6) are read.

Since it is supposed now that an acceptance response probability P(t) in the estimated coordination time information 115 is data for each coordinated entity, in a case where the recommendation level calculating apparatus 108 calculates recommendation levels, the recommendation level calculating apparatus 108 determines an integrated acceptance response probability IP(t) from the acceptance response probabilities P(t). The integrated acceptance response probability IP(t) is a probability that acceptance responses will be obtained from all proposed entities in a time period.

At Step S8122, the integrated acceptance response probability IP(t) that acceptance responses will have been received from all coordinated entities in each time period is computed from an acceptance response probability P(t) of each coordinated entity. For example, as a specific example, when there are two coordinated entities, in a case where a probability P_{B}(t) that an acceptance response to the plan ID 1 will be received from the coordinated entity B is:
10% for the first one-hour period;
30% for the second one-hour period; and
60% for the third one-hour period, and
a probability P_{c}(t) that an acceptance response to the plan ID 1 will be received from the coordinated entity C is: 20% for the first one-hour period;
70% for the second one-hour period; and
10% for the third one-hour period,
an integrated acceptance response probability IP(0-1) that acceptance responses to the plan ID 1 will have been received from all the coordinated entities in the first one-hour period is calculated from "(receiving an acceptance response to the plan ID 1 from B in the first one-hour period) and (receiving an acceptance response to the plan ID 1 from C in the first one-hour period)," thus this gives 0.1 × 0.2 = 0.02 (2%) supposing, for simplification, that their distributions are independent of each other.

Then, an integrated acceptance response probability IP(1-2) that acceptance responses to the plan ID 1 will have been received from all the coordinated entities in the second one-hour period is calculated from "(receiving an acceptance response to the plan ID 1 from B in the second one-hour period) and (receiving an acceptance response to the plan ID 1 from C in the second one-hour period)," "(receiving an acceptance response to the plan ID 1 from B in the first one-hour period) and (receiving an acceptance response to the plan ID 1 from C in the second one-hour period)" or "(receiving an acceptance response to the plan ID 1 from B in the second one-hour period) and (receiving an acceptance response to the plan ID 1 from C in the first one-hour period)." That is, this gives 0.1 × 0.7 + 0.2 × 0.3 + 0.3 × 0.7 = 0.34 (34%).

At Step S8123, coordination success probabilities S(t) are computed from integrated acceptance response probabilities IP(t). The coordination success probabilities S(t) are integral values of the integrated acceptance response probabilities IP(t), and treated as being constant in unit time. For example, in the example above, it is constant at 2% in the first one-hour period. If it is attempted to treat instantaneous probabilities, the probabilities become 0 undesirably, thus it is necessary to express the probabilities as ones in unit time having a certain range. The granularity of unit time can be set as desired.

In the example described above, in a case where acceptance responses have not been received from all the coordinated entities yet, the coordination success probability S(t) in the time period of 0 < t ≤ 1 is 2%, and S(t) in the time period of 1 < t ≤ 2 is 2 + 34 = 36%. As mentioned above, a coordination success probability S(t) can be determined by a product-sum calculation of acceptance response probabilities P(t) of a plurality of coordinated entities. Since coordination success probabilities S(t) are integral values of integrated acceptance response probabilities IP(t), they are typically expressed by monotonically increasing functions.

At Step S8124, recommendation levels R(t) are computed from the coordination success probabilities S(t) and the evaluation values E(t).

Here, the recommendation level R(t) of the time-dependent plan ID 1 can be computed about, for example, each time as
(a coordination success probability S(t) of the plan ID 1 at the time) × (a self-evaluation value E1(t) of the plan ID 1 at the time) + (a coordination failure probability 1-S(t) of the plan ID 1 at the time) × (a self-evaluation value E2(t) of an alternative proposal of the plan ID 1 at the time).

It is supposed here that the alternative proposal at a time of coordination failure of the plan ID 1 is one with a self-evaluation value at the time which is the second highest next to the plan ID 1. The computation described above is an example, and as long as coordination success probabilities and self-evaluation values which are time functions (or time-dependent values) are used, self-evaluation values, coordination success probabilities and coordination failure probabilities may be weighted appropriately or other functions may be used.

Step S813 is a process in which the control apparatus 105 instructs the data reading apparatus 104 to read the plan recommendation level information 116 from the DB, and transmits, to the plan-coordinated-entity response providing apparatus 101, a plan with currently the highest recommendation level R(t) as a plan to be proposed to the coordinated entities. If it is supposed here that the plan of the plan ID 1 is a plan with currently the highest recommendation level, a time at which the recommendation level of the plan ID 1 is no longer the highest is transmitted as a "recommendation deadline" to the plan-coordinated-entity response providing apparatus 101.

Step S814 is a process in which the control apparatus 105 reads the past response information 111, and determines whether or not all the coordinated entities have accepted the plan proposal before the recommendation deadline. In a case where all the coordinated entities have accepted the plan proposal, the procedure proceeds to Step S815, and in a case where all the coordinated entities have not accepted the plan proposal, the procedure proceeds to Step S816.

Step S815 is a process in which the CPU 201 of the terminal apparatus 110 causes the screen of the terminal apparatus 110 to display the plan proposal and the plan self-evaluation information.

Step S816 is a process of resetting the current time. After Step S816 ends, the procedure returns to Step S807.

Note that, in the example described above, separate response probabilities of coordinated entities are estimated, and joint distributions are derived supposing that there is joint independence therebetween. As another method, without estimating separate response probabilities of coordinated entities, time within which acceptance responses have been obtained from all coordinated entities as a result may be modelled directly from past histories or the like, and used to estimate coordination success probabilities S(t).

In addition, the total of the acceptance response probabilities is not necessarily 100%. For example, a proposal whose acceptance response probability is only 60% even if integration of the entire time is performed has a 40%-probability that rejection responses will be returned as a whole. When training is performed by using a history, it is also possible to use not only time distributions, but also response probability integral values thereof simultaneously.

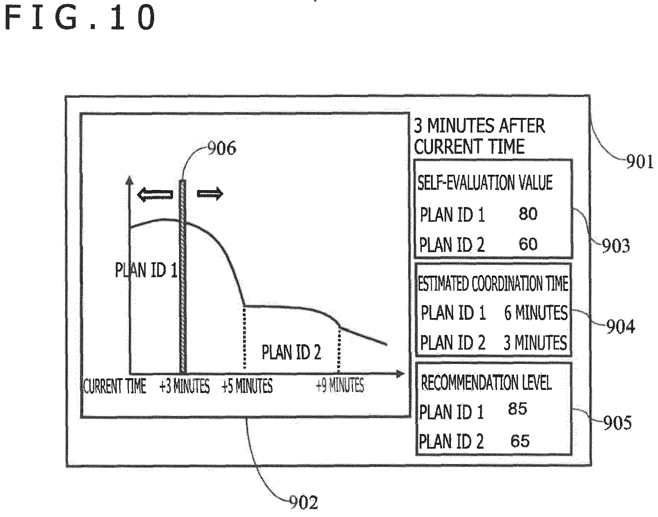

An overview of the processing procedure of the system in the implementation example has been explained thus far. Next, a result display screen for result display at Step 1104 is explained by using FIG. 10.

### <5. Display Screen Example>

FIG. 10 is a figure depicting an overview of a result display screen in the implementation example.

In this figure, a reference character 901 denotes a result display screen, a reference character 902 denotes a recommended plan display section, a reference character 903 denotes a self-evaluation value display section, a reference character 904 denotes an estimated coordination time display section, a reference character 905 denotes a recommendation level display section, and a reference character 906 denotes a scroll bar.

The recommended plan display section 902 displays recommendation levels that change over time on a graph, and displays a recommended plan that should be proposed to coordinated entities. For example, in the present implementation example, the plan ID 1 is proposed to the coordinated entities in the time range from zero to five minutes. In a case where all the coordinated entities do not accept the plan ID 1 before a lapse of five minutes, the plan ID 1 is withdrawn, and the plan ID 2 is proposed after the lapse of five minutes until a lapse of nine minutes.

By moving the scroll bar 906, plan self-evaluation values, estimated coordination time, and recommendation levels at a time represented by the scroll bar are displayed in the self-evaluation value display section 903, the estimated coordination time display section 904, and the recommendation level display section 905, respectively.

Note that whereas provision of transportation services in a railway system is explained in the implementation example, the implementation example can be applied similarly also to the fields of aviation, shipping, other passenger-related services, and transportation. Alternatively, in the fields of manufacturing and physical distribution also, the present implementation example can be applied in a case where coordination of operation plans about a plurality of resources is performed. In addition, whereas there are three resources, A, B, and C, for explanation in the implementation example, it is needless to say that the implementation example can be applied similarly also to a case where there are two or four resources or more.

### <6. Overall Plan Creation Procedure>

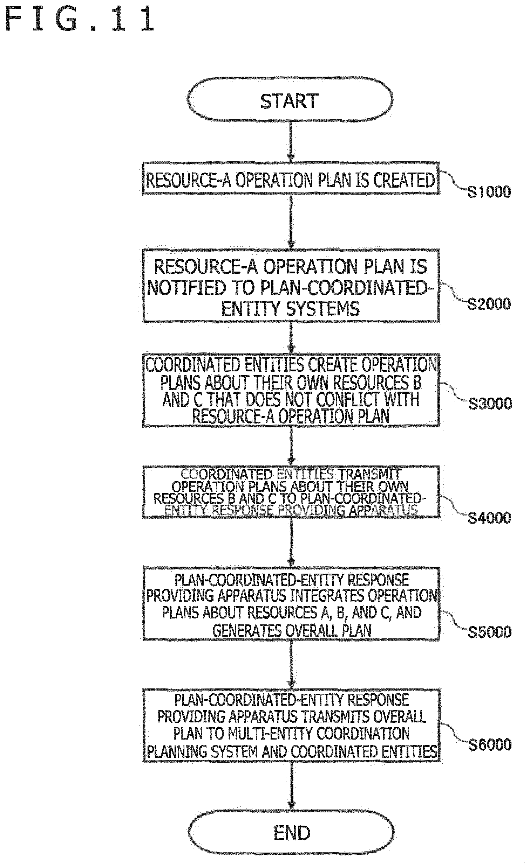

FIG. 11 is a flowchart explaining a procedure until an overall plan is created in the implementation example. An explanation regarding the procedure below is given below supposing that the system in FIG. 1 is used. In this case, as mentioned before, in order to provide services through coordination with resource groups (the resource groups B and C in the present example) managed by one or more other organizations, the multi-entity coordination planning system 100 creates a plan for operating the resource group A managed by an organization which the multi-entity coordination planning system 100 belongs to.

In a process S1000, the multi-entity coordination planning system 100 creates resource-A operation plans. This process is a process explained in FIG. 8. As a result of the process S1000, one or more plan proposals accepted by all coordinated entities are created. This result is displayed to an operator of the multi-entity coordination planning system 100 like at Step S815 of FIG. 8.

In a process S2000, the control apparatus 105 of the multi-entity coordination planning system 100 notifies the plan-coordinated-entity systems 117-1 and 117-2 of the content of an agreed resource-A operation plan through a network 102-1, the plan-coordinated-entity response providing apparatus 101, and a network 102-2.

In a process S3000, the coordinated entities create operation plans about their own resources B and C such that the operation plans do not conflict with the resource-A operation plan received at the plan-coordinated-entity systems 117-1 and 117-2. In this process, the operation plans may be created by manual work at the coordinated entities. Alternatively, the plan-coordinated-entity systems 117-1 and 117-2 may have configuration equivalent to that of the alternative plan proposal generating apparatus 106, and create the operation plans automatically.

In a process S4000, the coordinated entities transmit, to the plan-coordinated-entity response providing apparatus 101, the operation plans B and C about their own resources at the plan-coordinated-entity systems 117-1 and 117-2.

In a process S5000, the plan-coordinated-entity response providing apparatus 101 integrates the operation plans about the resources A, B, and C, and generates an overall plan. Since the content of each resource operation plan and integration of the operation plans are known, details thereof are omitted.

In a process S6000, the plan-coordinated-entity response providing apparatus 101 transmits the overall plan to the multi-entity coordination planning system 100 and the plan-coordinated-entity systems 117-1 and 117-2.

Whereas the overall plan generation process S5000 and the notification process S6000 are performed by the plan-coordinated-entity response providing apparatus 101 in the explanation described above, it is also possible to adopt configuration in which the plan-coordinated-entity response providing apparatus 101 is omitted, and the multi-entity coordination planning system 100 performs the process S5000 and the process S6000.

In the manner mentioned above, the multi-entity coordination planning system 100 creates the resource-A operation plan for which approvals of the coordinated entities are obtained. The plan is sent to the coordinated entities, and operation plans about the resources B and C are created at the coordinated entities such that those operation plans conform to the former plan. By integrating each resource operation plan, an overall plan is completed. In the present implementation example, an overall plan can be created efficiently as compared to conventional manners in which an overall plan is created by performing inter-plan coordination work after designing of individual resource operation plans.

Although the present implementation example has been explained thus far, the present invention is not limited to the implementation example described above, but includes various modification examples. For example, the implementation example described above is explained in detail in order to explain the present invention in an easy-to-understand manner, and the present invention is not necessarily limited to implementation examples including all the constituent elements explained. In addition, it is possible to replace some of the constituent elements of an implementation example with constituent elements of another implementation example, and it is also possible to add constituent elements of an implementation example to constituent elements of another implementation example. In addition, some of the constituent elements of each implementation example can additionally have other constituent elements, deleted or replaced with other constituent elements.

In addition, some or all of constituent elements, functionalities, processing sections, processing means, and the like described above may be realized by hardware by, for example, designing them in an integrated circuit, and so on. In addition, constituent elements, functionalities, and the like described above may be realized by software by a processor interpreting and executing a program to realize the functionalities. Information such as a program, a table, or a file to realize the functionalities can be placed on a recording apparatus such as a memory, a hard disk, or an SSD (Solid State Drive), or a recording medium such as an IC card, an SD card, or a DVD.

In addition, control lines and information lines that are considered to be necessary for explanation are depicted, and it is not always the case where all control lines and information lines required for products are depicted. Actually, it may be considered that almost all constituent elements are connected mutually.

In addition, whereas coordination of train operation plans, maintenance plans, and human resource operation plans are mentioned in the explanation of the implementation example, the application fields of the present invention are not limited to a train business, but the present invention can also be applied to resource allocation of airplane services, transportation service industries including MaaS (Mobility as a Service) among others, the production industry, and other service industries.

### Description of Reference Characters

100: Multi-entity coordination planning system
101: Plan-coordinated-entity response providing apparatus
102: Network
103: Plan self-evaluation apparatus
104: Data reading apparatus
105: Control apparatus
106: Alternative plan proposal generating apparatus
107: Plan coordination time estimating apparatus
108: Plan recommendation level calculating apparatus

## Claims

1. A multi-entity coordination planning system comprising:
a plan proposal generating apparatus that generates a plurality of plan proposals;
an evaluating apparatus that calculates time-dependent evaluation values of the plan proposals; and
a recommendation level calculating apparatus that calculates time-dependent coordination success probabilities of the plan proposals, and calculates recommendation levels that are time-dependent values from the evaluation values and the coordination success probabilities.

2. The multi-entity coordination planning system according to claim 1, comprising:
a control apparatus that selects a plan proposal to be proposed to a coordinated entity on a basis of the recommendation levels.

3. The multi-entity coordination planning system according to claim 2, wherein
the control apparatus
proposes, to the coordinated entity, a plan proposal with a highest recommendation level, and, in a case where coordination of plan proposals has not succeeded at a time point where a recommendation deadline has come, the recommendation deadline being set to a time where the recommendation level of the proposed plan proposal is no longer the highest, alternatively proposes, to the coordinated entity, a plan proposal with a highest recommendation level at the time point.

4. The multi-entity coordination planning system according to claim 1, wherein
the coordination success probabilities
are probabilities that acceptance responses from all coordinated entities to the plan proposals will have been received by a particular time.

5. The multi-entity coordination planning system according to claim 4, wherein
the coordination success probabilities
are calculated on a basis of integrated acceptance response probabilities that acceptance responses from all coordinated entities to the plan proposals will have been received in a predetermined time range.

6. The multi-entity coordination planning system according to claim 5, wherein
the integrated acceptance response probabilities are further dependent on the plan proposals.

7. The multi-entity coordination planning system according to claim 1, wherein
the evaluation values are determined in accordance with a time-dependent monotonically decreasing function, and the coordination success probabilities are determined in accordance with a time-dependent monotonically increasing function.

8. A multi-entity coordination planning method executed by an information processing apparatus including a CPU and a storage apparatus, the multi-entity coordination planning method comprising:
a first step of, by the CPU, generating a plurality of plan proposals, and storing the plurality of plan proposals on the storage apparatus;
a second step of, by the CPU, evaluating the plurality of plan proposals, generating self-evaluation values, and storing the self-evaluation values on the storage apparatus;
a third step of, by the CPU, estimating coordination time of the plurality of plan proposals, obtaining coordination time estimated values, and storing the coordination time estimated values on the storage apparatus;
a fourth step of, by the CPU, calculating recommendation values of the plan proposals on a basis of the self-evaluation values and the coordination time estimated values, and storing the recommendation values on the storage apparatus; and
a fifth step of, by the CPU, selecting at least one of the plurality of plan proposals on a basis of the recommendation values, and proposing the at least one plan proposal to a coordinated entity.

9. The multi-entity coordination planning method according to claim 8, wherein
the self-evaluation values and the coordination time estimated values are time-dependent values, and the recommendation values are time-dependent values, and
at the fifth step,
one of the plurality of plan proposals is selected on a basis of a relation in terms of levels of the recommendation values of the plurality of plan proposals.

10. The multi-entity coordination planning method according to claim 9, wherein,
at the fifth step,
a plan proposal having a highest recommendation value is selected from the plurality of plan proposals, and selection of an alternative plan proposal is triggered when the recommendation value of the selected plan proposal is no longer the highest.
